(19) Europäisches Patentamt
European Patent Office
Office européen des brevets

(11) EP 4 725 697 A1

(12) **EUROPÄISCHE PATENTANMELDUNG**

(43) Veröffentlichungstag:
**15.04.2026 Patentblatt 2026/16**

(21) Anmeldenummer: **25207501.5**

(22) Anmeldetag: **08.10.2025**

(51) Internationale Patentklassifikation (IPC):
***B32B 37/12*** (2006.01) ***C08G 59/40*** (2006.01)
***C08G 59/68*** (2006.01) ***B32B 37/00*** (2006.01)
***B32B 37/06*** (2006.01) ***B32B 37/10*** (2006.01)
***B32B 37/18*** (2006.01)

(52) Gemeinsame Patentklassifikation (CPC):
**B32B 37/0053; B32B 37/06; B32B 37/10; B32B 37/12; B32B 37/18;** B32B 2037/1238; B32B 2037/1253; B32B 2037/262; B32B 2037/268; B32B 2038/042; B32B 2250/05; B32B 2307/202; B32B 2307/208; B32B 2309/02; B32B 2309/04;
(Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **10.10.2024 DE 102024129351**
**26.02.2025 EP 25160199**

(71) Anmelder: **ThyssenKrupp Steel Europe AG**
**47166 Duisburg (DE)**

(72) Erfinder:
- **Brüggenbrock, Michael**
**47166 Duisburg (DE)**
- **Herget, Florian**
**47166 Duisburg (DE)**
- **Kranz, Stefan**
**47166 Duisburg (DE)**
- **Lewe, Tobias**
**47166 Duisburg (DE)**
- **Neher, Johan**
**47166 Duisburg (DE)**

(74) Vertreter: **ThyssenKrupp Steel Europe AG**
**SE/INN-IPM**
**Kaiser-Wilhelm-Straße 100**
**47166 Duisburg (DE)**

(54) **KONTINUIERLICHER PROZESS UND VORRICHTUNG ZUR VERKLEBUNG VON ELEKTROBAND IM STANZPROZESS**

(57) Die vorliegende Erfindung betrifft ein Verfahren und eine Vorrichtung zur Herstellung eines Blechpakets im Vollschnitt für einen Elektromotor. In dem Verfahren wird ein mit thermisch aktivierbarem Klebstoff beschichtetes Blech bereitgestellt, welches gestanzt und paketiert wird, wobei ein Aktivieren des Klebstoffs nach dem Austrennschritt erfolgt. Die Vorrichtung umfasst eine Abtrennvorrichtung, eine Bremse, einen axial beweglichen Stempel und eine Erwärmungseinrichtung, wobei die Erwärmungseinrichtung unterhalb der Bremse angeordnet ist.

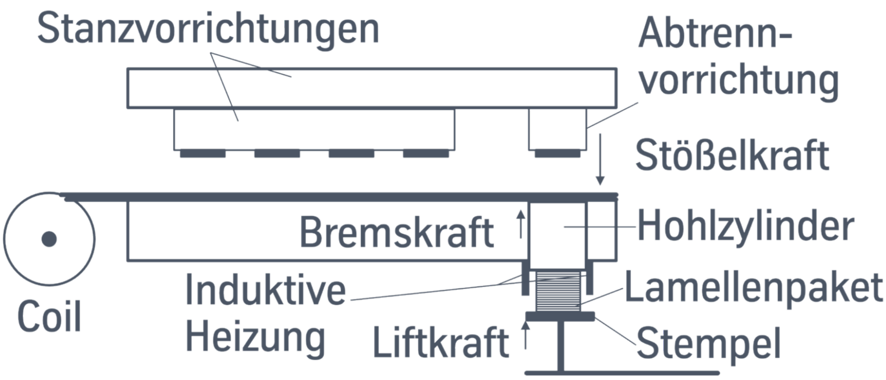


Fig. 1

EP 4 725 697 A1

(52) Gemeinsame Patentklassifikation (CPC): (Forts.)
B32B 2309/14; B32B 2310/0812; B32B 2311/30;
B32B 2363/00; B32B 2457/00

## Beschreibung

Die Erfindung betrifft eine Vorrichtung und ein Verfahren zum Herstellen von Blechpaketen in einem kontinuierlichen Prozess.

Ein Blechpaket kann beispielsweise ein Stator- oder Rotorpaket sein, wie es in einer elektrischen Maschine, wie beispielsweise einem Elektromotor oder einem Generator, eingesetzt wird.

Eine Herausforderung bei der Bereitstellung von Elektromotoren ist, die Effizienz des Elektromotors, beispielsweise die bereitgestellte Leistung pro Volumen und/oder den Wirkungsgrad, im Rahmen eines wirtschaftlich sinnvollen Aufwands zu erhöhen. Insbesondere sind Elektromotoren für den Antrieb im Automobilbau gefragt, welche mindestens einen Durchmesser von 150 mm haben.

Ein Konzept zur Bereitstellung von effizienten Elektromotoren ist die Herstellung von Statoren oder Rotoren oder von Teilen der Statoren oder Rotoren als sogenanntes Stator- oder Rotorpaket. Hierbei werden die genannten Bauteile als Blechpakete, auch als Lamellenpakete bezeichnet, aus einzelnen sogenannten Lamellen zusammengesetzt. Der Begriff der Lamelle bezeichnet ein Formteil, welches aus einem Elektroblech oder einem Elektroband ausgenommen wurde.

Eine gängige Methode hierfür ist das Ausstanzen der Lamelle. Die Lamellenpakete werden sodann aus einer Vielzahl von dünnen Lamellen zusammengesetzt, indem die Lamellen miteinander gestapelt und gegeneinander, bereichsweise oder bevorzugt vollständig, voneinander elektrisch isoliert sind. Üblicherweise werden Elektromotoren im Automobilbau im sogenannten Vollschnitt hergestellt, das heißt, dass eine Lamelle den kompletten Querschnitt eines Pakets darstellt. Im Gegensatz dazu können beispielsweise einzelne Stator- oder Rotorsegmentlamellen ausgeschnitten und zu einem Stator- oder Rotorsegment paketiert werden. Elektromotoren können aber auch im Teilschnitt (Segmentierung) hergestellt werden.

Die Herstellung einer derartigen Komponente, insbesondere eines derartigen Blechpakets, umfasst stets die Schritte der Herstellung von Lamellen sowie der Verbindung der Lamellen miteinander. Die Verbindung wird dabei bevorzugt in einer Weise vorgenommen, dass die Lamellen nach dem Verbinden abschnittsweise, bevorzugt vollständig, elektrisch voneinander isoliert sind, das heißt bevorzugt, dass zwei benachbarte Lamellen keine galvanische Verbindung zueinander haben.

Das Verbinden der gestanzten Lamellen zu einem Blechpaket kann durch eine Vielzahl bekannter Verfahren erfolgen, beispielsweise durch Verschrauben, durch Anlegen von Klammern, durch Verschweißen oder durch mechanische Verbindung beim Stanzpaketieren. Jedes dieser genannten, dem Fachmann geläufigen Herstellverfahren geht jedoch auf Grund der während der Verbindungsherstellung erzeugten mechanischen Einwirkung mit nachteiligem Einfluss auf die nach dem Verbinden vorherrschenden elektromagnetischen Eigenschaften des fertiggestellten Blechpakets einher. Insbesondere können mechanische Spannungen, die bei einer mechanischen Verbindung zwangsläufig zumindest in gewissem Maße unvermeidlich sind, sich nachteilig auf die magnetischen Eigenschaften und den Verlauf von Magnetfeldlinien innerhalb des Blechpakets auswirken, woraus sich unmittelbar ein nachteiliger Einfluss auf die Effizienz des Blechpaket aufweisenden Elektromotors ergibt. Eine beim Stanzpaketieren und/oder beim Schweißen/bei einer stoffschlüssigen Verbindung in der Regel auftretende elektrische Verbindung zwischen zwei und mehr Lamellen führt zu zusätzlichen Verlusten.

Eine elegante vorteilhafte Möglichkeit den nachteiligen Einfluss mechanischer Einwirkung auf die Lamellen zu verringern und gleichzeitig eine gute Isolation der Lamellen zueinander zu erreichen, ist der Einsatz von Klebstoffen und Backlacken als Verbindungsmittel. Diese Klebstoffe weisen auch isolierende Eigenschaften analog zu Elektroisolierlacken auf.

Es gibt verschiedene bekannte Verfahren und Vorrichtungen, wie Lamellen mittels Klebstoffs verbunden werden können. Alle Verfahren haben gemein, dass der Klebstoff im Verfahren aktiviert werden muss. Durch das Aktivieren startet der Vernetzungsprozess im Klebstoff. Der Klebstoff beginnt dabei bereits nach dem Aktivieren Lamellen zu verbinden bzw. vorzuverkleben. Die benötigten Temperaturen für die Aktivierung sind abhängig vom verwendeten Klebstoff.

Die DE 10 2012 001 744 A1 offenbart beispielsweise ein Verfahren, in dem der Klebstoff einer Beschichtung eines Elektroblechs aktiviert, gestanzt, gestapelt und anschließend unter Druck verbunden wird. Der Klebstoff wird vor oder während des Stanzens aktiviert, das heißt bevor die Lamellen zu einem Paket gestapelt werden. Die Aktivierung erfolgt durch Wärmeeinbringung. Die Wärmeeinbringung kann mittels unterschiedlicher Quellen erzeugt werden so zum Beispiel wie in der DE 10 2019 113 290 A1 durch Infrarotstrahlung.

Alle diese Verfahren haben gemein, dass durch die Wämeeinbringung auch die Blechstreifen bzw. die Lamellen vor oder während des Stanzens erhitzen. Durch die Wärmeeinbringung in der Lamelle kommt es zur Ausdehnung des Elektrobleches bzw. der Lamelle. Dies führt zur Beeinträchtigung der Maß-, Form- und Lagetoleranzen der gestanzten Lamelle und nachfolgend auch im Lamellenpaket/Bauteil. Des Weiteren kann eine Aktivierung vor oder während des Stanzens dazu führen, dass die Stanzwerkzeuge durch den bereits aktivierten Kleber verschmutzt oder verklebt werden und dadurch ein hoher Reinigungsbedarf der Vorrichtung erforderlich ist.

Es sind auch Verfahren zum Verkleben von Lamellen bekannt, in denen der Klebstoff zunächst vorgewärmt wird, die Lamellen gestanzt und gestapelt und nach dem Paketieren in einer Aushärteeinrichtung verbacken werden. Ein solches Verfahren wird beispielsweise in der EP 2 635 438 A1 offenbart. Nachteil dieses Verfahrens ist, dass der Prozess nicht kontinuierlich ist und ein hoher Platzbedarf für die Aushärteeinrichtung erforderlich ist. Durch den Transport zu der Aushärtestation ist außerdem ein Vorwärmen für das Vorverkleben der Lamellen erforderlich, damit das Lamellenpaket beim Transport zur Aushärtestation nicht auseinanderfällt oder deformiert. Dieses Vorerwärmen bzw. Aktivieren vor dem Stanzen führt wieder zu einem Wärmeeintrag in das Elektroblech vor dem Stanzen und kann auch zu einer Verunreinigung des Stanzwerkzeugs führen.

Daher ist es die Aufgabe der vorliegenden Erfindung, eine Vorrichtung und ein Verfahren für einen kontinuierlichen Prozess zur Herstellung eines Lamellenpakets zur Verfügung zu stellen, welche die Nachteile im Stand der Technik überwinden und einfach in bestehende Prozesse zu integrieren sind und dabei den Wartungsaufwand nicht erhöhen. Dabei ist insbesondere einerseits auf einen geringen Platzbedarf eines Mittels zur Aktivierung und Aushärtung des Klebstoffs zu achten und andererseits aber eine vollflächige Aushärtung sicher zu stellen. Das gesamte Verfahren bis zur Fertigstellung des Blechpakets soll eine hohe Produktionsrate ohne Einbußen in der Qualität im Vergleich zum Stand der Technik gewährleisten, insbesondere in Bezug auf die magnetischen Eigenschaften eines Stators oder Rotors. Dabei darf der Verklebungsprozess die Taktzeit des Schneidens der Lamellen nicht beeinträchtigen.

Gelöst wird diese Aufgabe durch ein Verfahren zum Herstellen eines Blechpakets im Vollschnitt oder Teilschnitt, insbesondere eines Stator- oder Rotorpaketes, für einen Elektromotor, insbesondere für den Antrieb im Automobilbau, wobei das Verfahren folgende Schritte bevorzugt in der angegebenen Reihenfolge umfasst:

a) Bereitstellen eines mit einem thermisch aktivierbaren Klebstoff beschichteten Blechs, bevorzugt beidseitig beschichtet,

b) Einen oder mehrere Schneideschritte mit einem Austrennschritt einer vorgegebenen Anzahl von Lamellen und Aufbringen eines Trennmittels nach der vorgegebenen Anzahl an Lamellen,

c) Auffangen und Stapeln der Lamellen in einer Bremse insbesondere Hohlzylinder,

d) Axiale Kraftbeaufschlagung auf den Lamellenstapel,

e) Optionale zweite axiale Kraftbeaufschlagung auf den Lamellenstapel

dadurch gekennzeichnet, dass ein Aktivieren des Klebstoffs nach dem Austrennschritt, bevorzugt während des Stapelns, besonders bevorzugt während der axialen Kraftbeaufschlagung, erfolgt.

Durch die Aktivierung des Klebstoffs nach dem Stanzen kann keine Verschmutzung im Stanzwerkzeug durch den bereits aktivierten Klebstoff erfolgen. Außerdem gibt es keine Ausdehnung des Blechs während des Stanzens. Hierdurch werden thermische Spannungen im Blech vermieden, die zu Maßungenauigkeiten in der Lamelle und im Blechpaket führen können.

In einer besonderen Ausführungsform kann die Aktivierung während des Stapelns, bevorzugt während der axialen Kraftbeaufschlagung erfolgen, wodurch noch eine höhere Maßhaltigkeit im Blechpaket erreicht werden kann.

Des Weiteren wird die Aufgabe gelöst durch eine Vorrichtung zur Herstellung eines Blechpakets im Vollschnitt oder Teilschnitt, insbesondere eines Stator- oder Rotorpakets, für einen Elektromotor, umfassend

a) eine oder mehrere Stanzvorrichtungen mit einer Austrennvorrichtung,

b) in einer Bremse, so ausgebildet, dass die Lamellen aus der finalen Ausstanzvorrichtung positions- und/oder winkelausgerichtet übereinander stapelbar sind,

c) eine Erwärmungseinrichtung, bevorzugt Induktionsspule, welche unterhalb der Bremse angeordnet ist, bevorzugt so dass die Bremse nicht durch die Erwärmungseinrichtung erwärmt werden kann,

d) einen axial beweglichen Stempel, welcher an der gegenüberliegenden Öffnung der Bremse von der Ausstanzvorrichtung angeordnet ist.

Die Bremse bremst die Lamellenpakete, welche aus der Austrennvorrichtung kommen, ab. Eine Bremse hat zwei gegenüberliegende Öffnungen. In einer besonderen Ausführungsform kann eine Bremse ein Hohlzylinder sein.

Durch die Erwärmungseinrichtung kann der Klebstoff auf den Lamellen nach dem Austrennschritt erwärmt werden, ohne dass die Lamellen Kontakt zu einem erwärmten Werkzeug >80 °C haben. Dadurch kann es nicht zu Verschmutzungen der Werkzeuge durch den aktivierten Klebstoff kommen. In einer besonderen Ausführungsform kommt es nicht zu einem solchen Kontakt, wenn die Vorrichtung so ausgelegt ist, dass sich die Bremse nicht erwärmt. Würde sich die Bremse oberhalb der Aktivierungstemperatur des Klebstoffs erwärmen, so könnte es zu Klebstoffverschmutzungen durch den Rand der Lamellen in der Bremse. Außerdem könnten die Lamellen sich aufgrund ihres unterschiedlichen Abstandes zu der Heizquelle in der Bremse unterschiedlich erwärmen und verformen.

In einer besonderen Ausführungsform umfasst die Erwärmungseinrichtung eine oder mehrere Induktionsspulen, wodurch insbesondere kontaktfrei über einen Induktionsspule Wärme von innen und/oder außen in das Blechpaket eingebracht werden kann.

Der axial bewegliche Stempel bewirkt im Verfahren eine Kraftbeaufschlagung. Zusätzlich wirkt sich das Gewicht der gestapelten Lamellen aus. Ferner kann das Austrennmittel, insbesondere der finale Ausstanzstempel, ebenfalls einen axialen Gegendruck zu dem unten angeordneten Stempel bewirken.

Durch die erfindungsgemäße Anordnung der Erwärmungseinrichtung, bevorzugt Induktionsspule, und des axial beweglichen Stempels ist es möglich, die Erwärmungseinheit bestehend aus Spule und Stempel in bestehende Anlagen nachzurüsten, da die Bremse und die Stanzeinheit bestehen bleiben können. Des Weiteren ist der benötigte Platzaufwand für die Nachrüstung gering.

In einer besonderen Ausführungsform sind die Bremse und/oder der Stempel drehbar, bevorzugt synchron drehbar. Dies führt zu vollflächigeren magnetischen Eigenschaften und verbesserten Maß-, Form- und Lagetoleranzen im Blechpaket.

Im Folgenden wird das erfindungsgemäße Verfahren im Detail beschrieben.

Schritt a)

In Schritt a) des Verfahrens wird ein mit einem thermisch aktivierbaren Klebstoff beschichtetes Blech zur Verfügung gestellt.

In einer besonderen Ausführungsform ist das Blech ein Elektroblech. Im Sinne der Erfindung werden die Begriffe "Elektroblech" und "Elektroband" als Synonyme, also äquivalent verwendet. Bevorzugt weist das Elektroblech eine Dicke ≤ 0,35 mm, besonders bevorzugt ≤ 0,30 mm, insbesondere bevorzugt ≤ 0,25 mm auf, insbesondere 0,20 mm, da dünnere Elektroblechdicken Eigenschaften, insbesondere die Leistung, des späteren Motors oder Generators erhöhen in dem das Blechpakets verbaut ist. Das erfindungsgemäße Verfahren ist für Dicken ≤ 0,35 mm, bevorzugt ≤ 0,30 mm, besonders bevorzugt ≤ 0,25 mm, insbesondere ≤ 0,20 mm besonders vorteilhaft, da dünne Bleche insbesondere mit einer hohen Verformung auf Grund von eingebrachter Wärme reagieren. Daher ist eine Anpassung des Verfahrens ausgehend vom Stand der Technik insbesondere erforderlich.

Besonders bevorzugt ist das Blech als nicht kornorientiertes Elektroband, auch als sogenanntes NO-Elektroband bezeichnet, ausgebildet oder aus einem solchem abgetrennt, wobei das nicht-kornorientierte Elektroband neben Fe und unvermeidbaren Verunreinigungen folgende Elemente enthält (alle Angaben in Gew.-%):

0,1 bis 4,00 Si,

0,01 bis 2,00 Al,

0,07 bis 1,50 Mn,

optional bis zu 0,25 P.

Es versteht sich, dass die Gesamtheit aller Legierungsbestandteile und der Verunreinigungen sich zu 100 Gew.-% ergänzen.

Besonders bevorzugt werden die nachfolgenden Bedingungen eingehalten (alle Angaben in Gew.-%):

2,3 bis 3,50 Si,

0,3 bis 1,1 Al,

0,07 bis 0,250 Mn,

optional bis zu 0,030 P, Rest Fe und unvermeidbare Verunreinigungen.

Es versteht sich, dass die Gesamtheit aller Legierungsbestandteile und der Verunreinigungen sich zu 100 Gew.-% ergänzen.

Vorzugsweise weist das nicht-kornorientierte Elektroband oder das nicht-kornorientierte Blech eine Streckgrenze in Längsrichtung bei Standardnormalbedingungen von 190 bis 610 MPa und eine maximale Zugfestigkeit von 310 bis 740 MPa und eine Mindestbruchdehnung A80 von 6 bis 48 % gemessen in Anlehnung an DIN EN ISO 6892-1 sowie eine Härte Hv5 von 100 bis 250 auf.

In einer besonders bevorzugten Ausführungsform weist der Werkstoff eine Streckgrenze in Längsrichtung bei Raumtemperatur von 310 bis 600 MPa und eine maximale Zugfestigkeit von 400 bis 700 MPa sowie eine Bruchdehnung A80 von 7 bis 32 % gemessen in Anlehnung an DIN EN ISO 6892-1 sowie eine Härte Hv5 von 130 bis 250 auf.

Das Material weist bevorzugt eine Anisotropie bei P1,0; 400 Hz im Bereich von 5 bis 17 % auf.

In einer besonderen Ausführungsform ist das Blech selbst bereits ein mehrschichtiges bzw. mehrlagiges System wie bspw. Sandwichmaterial.

Es wird ein Blech bereitgestellt, das zumindest bereichsweise mit einer thermisch aushärtbaren Klebstoffbeschichtung versehen ist. Das bedeutet, dass das Blech eine Klebstoffbeschichtung aufweist, die nach einer, beispielsweise thermisch ausgelösten, Aktivierung härtet und dadurch ihre Klebeigenschaften entfaltet. Bei der Klebstoffbeschichtung handelt es sich um eine Klebstoffbeschichtung auf Polymerbasis. Bevorzugt ist das Blech vollflächig mit der Klebstoffbeschichtung beschichtet, entweder einseitig oder, besonders bevorzugt, beidseitig. Bei dem Blech kann es sich beispielsweise um ein Elektroband handeln oder um eine aus einem Blechband geschnittene, bevorzugt gestanzt abgetrennte Platine.

Besonders bevorzugt werden beide Oberflächen der Lamellen mit einem thermisch aktivierbaren Klebstoff beschichtet, so dass bei dem Fügen der Lamellen Klebstoffoberfläche an Klebstoffoberfläche grenzt, mit dem Vorteil einer sehr guten Haftung aneinander.

Durch die erfindungsgemäße Verfahrensweise ist im Gegensatz zu Verfahren mit beheizten Werkzeugen eine zweiseitige Beschichtung möglich, da die Gefahr der Verschmutzung des Werkzeugs nicht gegeben ist.

Als Klebstoff wird ein thermisch aktivierbarer Klebstoff eingesetzt. Dadurch, dass der Klebstoff zunächst thermisch aktiviert werden muss, kann die Klebefunktion nach dem Ausnehmen von mit Klebstoff beschichteten Lamellen aus dem Blech, beispielsweise durch Stanzen, zu einem gewünschten Zeitpunkt beziehungsweise zu einem gewünschten Verfahrensschritt vorgenommen werden.

In einer bevorzugten Ausführungsform wird ein Klebstoff eingesetzt, in ≤60 Sekunden, bevorzugt ≤30 Sekunden aktiviert wird. Diese geringen Verarbeitungszeiten haben den Vorteil, dass die Prozessgeschwindigkeit durch übliche Stanzgeschwindigkeit und nicht durch die Verklebegeschwindigkeit begrenzt ist.

Die verwendeten Klebstoffe werden als flüssiger Klebstoff, in dem die Klebstoffkomponenten einzelnen vorliegen, auf das Elektroband aufgetragen. Der Klebstoff vor der Applikation liegt hierbei im sogenannten A-Zustand vor. Nach der Applikation trocknet der Klebstofffilm und es bildet sich somit ein klebfreier Film. In diesem Zustand liegt der Klebstoff im sogenannten B-Zustand vor. Im B-Zustand können beschichtete Substrate transportiert, gelagert und auch weiterverarbeitet werden. Zum Aktivieren des Klebstoffs ist eine Temperaturerhöhung notwendig, die zum Aufschmelzen und zur Aktivierung der Klebstoffkomponenten führt. Es setzt die chemische Härtung ein. Ist diese abgeschlossen, befindet sich der Klebstoff im C-Zustand.

In einer besonderen Ausführungsform wird bevorzugt ein Klebstoff verwendet, der enthält:

- 60 Gewichtsteile mindestens eines Epoxidharzes bezogen auf seine Festharzform,
- 0,5 bis 15 Gewichtsteile eines latenten Härters,
- 1 bis 15 Gewichtsteile eines latenten Beschleunigers.

Bevorzugt weist der Klebstoff 1 bis 10 Gewichtsteile des latenten Härters, besonders bevorzugt 2 bis 5 Gewichtsteile des latenten Härters auf.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut latent bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

In verwendbarem Zustand, also in zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor. Diese enthält in einer Alternative organische Lösungsmittel, in einem Anteil von maximal 40 Gew.-%, bevorzugt maximal 30 Gew.-%, besonders bevorzugt maximal 20 Gew.-%, insbesondere maximal 18 Gew.-% bezogen auf die wässrige Dispersion mit 100 %. In diesem Anteil organischer Lösungsmittel ist in einer weiteren Alternative ein Anteil von 15 Gew.-%, bevorzugt maximal 10 Gew.-%, besonders bevorzugt maximal 7 Gew.-%, insbesondere maximal 5 Gew.-% VOC enthalten. Das bedeutet, dass bei beispielsweise einem Anteil von 40 Gew.-% organischer Lösungsmittel und einem Anteil von beispielsweise 15 Gew.-% VOC die restlichen 25 Gew.-% bis zu dem Gesamtanteil von 40 Gew.-% organischer Lösungsmittel andere, nicht-VOC organische Lösungsmittel sind. In einer Alternative, werden als nicht-VOC Lösungsmittel sogenannte grüne Lösungsmittel eingesetzt. Diese sind biologisch abbaubar, nicht ätzend und ungiftig, d.h. sie benötigen keine Kennzeichnung als Gefahrstoff, mit Siedepunkt Temperaturen von 190 °C bis 230 °C wie z. B. dibasische Ester (DBE), insbesondere die Dimethylester der Dicarbonsäuren (Glutarsäure, Bernsteinsäure und Adipinsäure). Als untere Grenze sind in einer Alternative für die VOC 0 Gew.-% bzw. in einer weiteren Alternative der Gesamtanteil organischer Lösungsmittel 0 Gew.-%.

Die Verwendung von Wasser als Basis der Klebstoffmischung im A-Zustand in einer Ausführung hat sowohl gesundheitliche als auch sicherheitstechnische Vorteile. Durch die Abwesenheit jeglicher VVOC und dem gegebenenfalls relativen geringen Anteil an weiteren organischen Lösungsmitteln und/oder VOC werden gesundheitsschädliche und gefährliche, brennbare Abgase vermieden und/oder minimiert.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor.

Das in dem bevorzugt verwendeten Klebstoff vorhandene Epoxidharz umfasst eine oder mehrere Epoxidharzkomponenten mit mehr als einer Epoxidgruppe,

von denen vorzugsweise mindestens ein Epoxidharz ein Erweichungspunkt größer 50 °C besitzt.

Bei den Epoxidharzen kann es sich beispielsweise um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen. In einer bevorzugten Ausgestaltung der vorliegenden Erfindung ist das Epoxidharz auf Basis Bisphenol A-Epoxidharz.

Beispiele für aliphatische Epoxidharze können sein Butandioldiglycidylether, Hexandioldiglycidylether, Dimethylpentandioxid, Butadiendioxid, Diethylenglycoldiglycidylether. Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-o-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

Die Verbindungen können einzeln oder in Kombination eingesetzt werden.

In einer bevorzugten Ausgestaltung ist das Epoxidharz eine Mischung unterschiedlicher Epoxidharze. In einer Alternative ist eines davon ein Epoxi-Novolac-Copolymer. Ein Epoxi-Novolac-Copolymer ist ein Copolymerisationsprodukt aus einem Novolac und einer Epoxidgruppen aufweisenden Verbindung, so dass das Copolymer eine Epoxi-Reaktivität aufweist.

In einer besonderen Ausführungsform enthält der Klebstoff im A-Zustand mindestens zwei verschiedene Epoxidharze oder Epoxidharzgruppen. Überaschenderweise hat sich herausgestellt, dass dadurch trotz verbesserter Lagerstabilität auch eine gute NIR-Aktivierung (Reaktivität) beibehalten werden konnte.

Insbesondere hat es sich als vorteilhaft herausgestellt, wenn die mindestens zwei verschiedenen Epoxidharze oder Epoxidharzgruppen eine unterschiedlicher Glasübergangstemperatur $T_{G_B}$ aufweisen. Besonders bevorzugt werden 2 oder mehr unterschiedliche Epoxidharze oder Epoxidharzgruppen eingesetzt, wobei mindestens ein Epoxidharz ein Copolymer aus Bisphenol-A-Epoxidharz und Novolac ist, anders ausgedrückt ein Bisphenol-A Epoxi-Novolac Copolymer, insbesondere ein mit Bisphenol-A modifiziertes Novolac-Epoxidharz ist.

In einer Alternative weist dieses Epoxidharz oder Epoxidharzgruppe eine mittlere Molmasse von mindestens 1500 g/mol, bevorzugt mindestens 1600 g/mol, besonders bevorzugt mindestens 1700 g/mol, insbesondere mindestens 1800 g/mol und maximal 2200 g/mol, bevorzugt maximal 2100 g/mol, besonders bevorzugt maximal 2000 g/mol, insbesondere maximal 1900 g/mol auf.

In einer weiteren Alternative besitzt dieses Epoxidharz eine Funktionalität von mindestens 6, bevorzugt mindestens 7, besonders bevorzugt mindestens 7,5 und maximal 10, bevorzugt maximal 9, besonders bevorzugt maximal 8; mit einem Epoxyäquivalentgewicht von mindestens 200 g/mol, bevorzugt mindestens 250 g/mol, besonders bevorzugt mindestens 260 g/mol, insbesondere mindestens 270 g/mol und maximal 350 g/mol, bevorzugt maximal 320 g/mol, besonders bevorzugt maximal 300 g/mol, insbesondere maximal 290 g/mol auf.

In einer Ausführung wird als zweites oder weiteres Epoxidharz oder Epoxidharzgruppe ein Bisphenol-A-Epoxidharz verwendet.

In einer Alternative weist das zweite oder weitere Epoxidharz oder Epoxidharzgruppe eine mittlere Molmasse von mindestens 2500 g/mol, bevorzugt mindestens 3000 g/mol, besonders bevorzugt mindestens 3500 g/mol, insbesondere mindestens 4000 g/mol und maximal 6000 g/mol, bevorzugt maximal 5500 g/mol, besonders bevorzugt maximal 5000 g/mol, insbesondere maximal 4500 g/mol auf. In einer weiteren Alternative besitzt dieses Epoxidharz eine Funktionalität von mindestens 1, bevorzugt mindestens 1,5, besonders bevorzugt mindestens 1,8 und maximal 3, bevorzugt maximal 2,5, besonders bevorzugt maximal 2,2; mit einem Epoxyäquivalentgewicht mindestens 1200 g/mol, bevorzugt mindestens 1500 g/mol, besonders bevorzugt mindestens 1800 g/mol, insbesondere mindestens 2000 g/mol und maximal 3000 g/mol, bevorzugt maximal 2700 g/mol, besonders bevorzugt maximal 2500 g/mol, insbesondere maximal 2100 g/mol . Die Kombination der Epoxidharzgruppen mit den unterschiedlichen Reaktivtäten, d.h. niedrige und hohe Reaktivität im erfindungsgemäßen Bereich führt insbesondere zu einer weiter verbesserten Lagerstabilität.

In einer besonderen Ausführungsform ist das mindestens erste Epoxidharz oder Epoxidharzgruppe ein Novolac Copolymer Epoxidharz mit einer Funktionalität von 6 bis 10 und das mindestens zweite Epoxidharz oder Epoxidharzgruppe auf Basis Bisphenol A mit einer Funktionalität von 1 bis 3.

In einer weiteren besonderen Ausführungsform ist das mindestens erste Epoxidharz oder Epoxidharzgruppe mit Funktionalität 6 bis 10 ein Copolymer aus Bisphenol A mit Novolack Epoxidharz.

Eine Epoxidharzgruppe bezeichnet eine Mischung aus zwei oder mehreren Epoxidharzen, die innerhalb der Gruppe die jeweils oben genannten Funktionalitäten und Molmassen aufweisen.

In einer besonderen Ausführungsform liegen genau zwei verschiedene Epoxidharze oder zwei verschiedenen Epoxidharzgruppen, der oben beschriebenen Form vor. In dieser Ausführung liegen diese in einem Mischungsverhältnis von 4,0:1,0 bis 1,0:4,0, bevorzugt von 2,0:1,0 bis 1,0:2,0, besonders bevorzugt von 1,5:1,0

bis 1,0:1,5, insbesondere von 1,1:1 bis 1:1,1, bezogen auf Gewichtsteile in Festharzform vor. Dadurch wird die Wärmstabilität des Klebstoffs sowohl im B- als auch im C-Zustand positiv beeinflusst, insbesondere wird bis 200 °C der Klebstoff im C-Zustand nicht zu weich.

Als latenter Härter wird eine Substanz oder ein Gemisch von Substanzen verwendet, die vorzugsweise bei Temperaturen im Bereich von 80 °C bis 200 °C Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden. In einer besonderen Ausführungsform enthält der Härter nur Dicyandiamid oder bestehet daraus.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2"methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-5 Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin,2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

Der Klebstoff kann in einer Ausgestaltung 1 bis 10 Gewichtsteile eines latenten Beschleunigers, bevorzugt 1 bis 5 Gewichtsteile eines latenten Beschleunigers, besonders bevorzugt 1 bis 4 Gewichtsteile eines latenten Beschleunigers, ganz besonders bevorzugt 1 bis 3 Gewichtsteile eines latenten Beschleunigers enthalten.

In einer anderen bevorzugten Ausführungsform ist vorgesehen, dass der Klebstoff weiterhin 0,2 bis 8 Gewichtsteile, bevorzugt 0,2 bis 4 Gewichtsteile, Absorptionsadditive aufweist. Die Absorptionsadditive, die gemäß dieser weiterführenden Idee vorgesehen sein kann, ist aus der Gruppe der Flammruße und/oder aus der Gruppe der wasserlöslichen Farbstoffe ausgewählt.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gewichtsteilen, bevorzugt 1 bis 6 Gewichtsteilen, in dem Kleber enthalten sein.

Bevorzugt weist der latente Beschleuniger ein Harnstoffderivat und/oder ein Imidazol auf.

Besonders bevorzugt ist das Harnstoffderivat ein N,N-Dimethylharnstoff oder ein N,N'-Dimethylharnstoff oder ein bifunktionelles Harnstoffderivat, bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

In einer Variante des Verfahrens wird als Harnstoffderivat auch oder ausschließlich ein unsymmetrisch substituierter Harnstoff verwendet.

In einer alternativen Weiterbildung des Verfahrens wird ein Harnstoffderivat eingesetzt, bei welchem mindestens eines, bevorzugt 2, besonders bevorzugt 3 Wasserstoffatome durch, voneinander unabhängig, Alkylgruppen und oder Phenyl Gruppen, die ihrerseits substituierter sein können, ersetzt sind. Bevorzugt handelt es sich bei den Alkylgruppen um Methyl, Ethyl, Propyl oder Butyl, bevorzugt Methyl; bei der Phenyl Gruppe handelt es sich um Phenyl oder um ein substituiertes Phenyl, bevorzugt in Position 4, ebenfalls bevorzugt ein der oben genannten Alkyle. In einer weiteren Alternative wird im Sinne der Erfindung ein difunktionelles Harnstoffderivat als ein oben beschriebenes Derivat bezeichnet, welches 2 funktionelle Gruppen aufweist. Funktionelle Gruppen sind Atomgruppen, welche die Stoffeigenschaften und insbesondere das Reaktionsverhalten der Verbindung maßgeblich bestimmen, insbesondere gehen die funktionellen Gruppen Reaktionen ein.

Ferner ist das einzusetzende Harnstoffderivat bevorzugt halogenfrei. In einer Alternative weist das einzusetzende Harnstoffderivat 2 Harnstoffderivate als funktionelle Gruppen auf. Vorteilhaft können dadurch Epoxyharze ohne die Anwesenheit von Dicyanamiden als Vernetzer gehärtet werden.

Als Harnstoffderivat kann auch ein Stoff

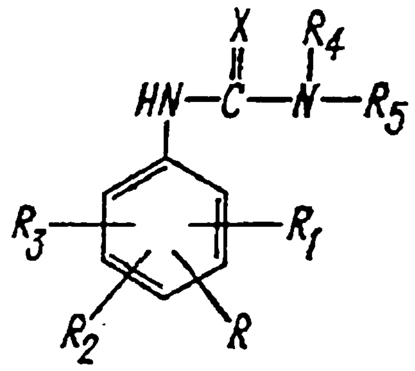

vorgesehen sein mit R: Wasserstoff oder eine Gruppe gemäß

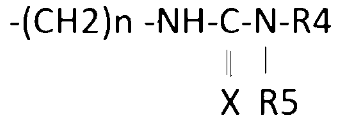

mit

- n = 0 oder 1, bevorzugt 1,
- X = O oder S, bevorzugt O,
- R1, R2 und R3: jeweils Wasserstoff, ein Halogen, Nitro-Gruppe, eine substituierte oder nichtsubstituierte Alkylgruppe, Alkoxylgruppe, Arylgruppe oder Aryloxylgruppe,
- R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,
- R5: wie R4 oder Alkoxylgruppe, R5 optional mit R4 einen heterocyklischen Ring bildend, oder ein N,N-Dimethyl-N'-(3,4-Dichlorophenyl)Harnstoff oder ein N,N-Dimethyl-N'-(3-chioro-4-methylphenyl)Harnstoff oder ein N,N-Dimethyl-N'-(3-chloro-4-methoxyphenyl)Harnstoff oder ein 10 N,N-Dimethyl-N'(3-chloro-4-ethylphenyl)Harnstoff oder ein N,NDimethyl-N'-(4-methyl-3-nitrophenyl)Harnstoff oder ein N-(N'-3,4-dichlorophenylcarbamoyl)morpholine oder ein N,N-dimethyl-N'(3-chloro-4-methylphenyl) thio-Harnstoff; bevorzugt ist das Harnstoffderivat 4,4'-Methylen-bis- (Phenyldimethylharnstoff); oder eine Mischung aus zwei, drei oder mehreren der vorgenannten. Eine solche Mischung enthält bevorzugt mindestens 10 %, 25 %, bevorzugt 50 %, 60 %, 70 %, 80 % oder 90 % 4,4'-Methylenbis-(Phenyldimethylharnstoff).

Die mittlere Teilchengröße (arithmetisches Mittel) des Harnstoffderivats ist bevorzugt zwischen 1 Mikrometer und 30 Mikrometer.

In einer anderen bevorzugten Ausführungsform ist vorgesehen, dass der Klebstoff weiterhin 0,2 bis 8 Gew.-%, bevorzugt 0,2 bis 5 Gew.-%, eines IR-Absorber aufweist. Hierdurch kann Absorption Wärmestrahlung, also Aktivierung verbessert werden. Der Farbstoff kann aus der Gruppe der Flammruße, der Eisenoxidschwarzpigmente, oder der wasserlöslichen Farbstoffe ausgewählt sein oder eine Mischung von mehreren der vorgenannten.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gew.-%, bevorzugt 1 bis 6 Gew.-%, in dem Klebstoff enthalten sein.

Die Klebstoffzusammensetzung kann darüber hinaus noch weitere Komponenten enthalten, beispielsweise ein Korrosionsschutzadditiv.

Bevorzugt enthält der Klebstoff eines oder mehrere der dem Fachmann bekannten Füllstoffe, der ausgewählt wird aus der Gruppe enthaltend oder bestehend aus Silikate wie Ton, Lehm, Talk, Glimmer, Kaolin, Neuburger Kieselerde, Karbonate/Sulfate wie Kreide, Dolomit, Baryt und Oxide/Hydroxide wie Quarzmehle, kristalline Kieselsäure, Aluminium-/Magnesiumhydroxide sowie Magnesium-, Zink- oder Kalziumoxide oder synthetische Silikate, Oxide und Hydroxide, hergestellt entweder durch Fällungsverfahren (Kieselsäure, Kreide, Aluminium- und Magnesiumhydroxid) oder in thermischen Prozessen (pyrogenes Siliciumdioxid, Ruß, Metalloxide); Glasfasern, Glaskugeln und Glasbruch), in Mengen von 1 bis 20, bevorzugt 1 bis 10 Gew.-%, besonders bevorzugt 1 bis 6 Gew.-%.

Bevorzugt enthält der Klebstoff eines oder mehrere der dem Fachmann bekannten Korrosionsschutzadditive. Die Korrosionsschutzadditive können in Mengen von 1 bis 10 Gew.-%, bevorzugt 1 bis 5 Gew.-%, in dem Klebstoff enthalten sein.

In einer Alternative enthält die Dispersion Entschäumer und/oder Benetzungsmittel.

In einer Ausführung ist der erfindungsgemäße Klebstoff frei von Weichmacher, insbesondere frei von Phthalaten wie DEHP und/oder DBP (Diethylhexylphthalat und Dibutylphthalat) und/oder insbesondere ist der erfindungsgemäße Klebstoff frei von Weichmacher im sogenannten B-Zustand auf dem beschichteten Substrat.

In einer bevorzugten Ausführungsform weist der Klebstoff ein besonderes Verhältnis der Glasübergangstemperaturen auf, wobei die Glasübergangstemperatur $T_{G_c}$ im C-Zustand im Verhältnis zur Glasübergangstemperatur $T_{G_B}$ im B-Zustand $2{,}20 \leq T_{G_c} / T_{G_B} \leq 5{,}00$ bevorzugt $\leq 4{,}90$ und/oder $\geq 2{,}50$, besonders bevorzugt $\leq 4{,}80$ und/oder $\geq 2{,}70$, insbesondere bevorzugt $\leq 4{,}70$ und/oder $\geq 3{,}00$ oder insbesondere bevorzugt $\leq 4{,}50$ und/oder $\geq 3{,}50$ beträgt. Überaschenderweise hat sich gezeigt, dass durch das erfindungsgemäße Verhältnis der Glasübergangstemperaturen im B-Zustand und C-Zustand ein Klebstoff mit einer hervorragenden Lagerstabilität und geringen Haftungsverlusten einstellt.

Beim Erwärmen des Klebstoffs, sowohl im B-Zustand als auch im C-Zustand stellt man ab einer bestimmten Temperatur eine Erweichung fest. Aufgrund der Erwärmung und der sich daraus ergebenden Erweichung treten Segmentschwingungen auf. Der Klebstoff verhält sich viskoelastisch. Beim Übergang von einem glasartigen, härteren, spröderen Zustand in den viskoelastischen, weichen Zustand wird die Glasübergangstemperatur (Glastemperatur, Glaspunkt) $T_G$ durchlaufen.

Die Glasübergangstemperatur wird mittels Dynamisch Mechanischen Thermo Analyse (DMTA) bestimmt, bevorzugt mittels RSA G2 von TA Instruments. Zunächst wird der Klebstoff auf ein Blech aufgetragen und getrocknet, so dass er sich im B-Zustand befindet und aus zwei Blechen ein Sandwich im B-Zustand bei 60 °C für 10 min und bei einem Druck von 3 N/mm$^2$ gebildet. Außerdem wird ein Sandwich hergestellt, wobei das Sandwich bei 5 min für 170 °C und bei einem Druck von 3 N/mm$^2$ verklebt wird, so dass der Klebstoff sich im C-Zustand befindet. Anschließend werden rechteckige Prüfkörper aus beiden Sandwichtypen hergestellt. Diese werden mittels 3-Punkt Biegung im Temperaturverlauf gemessen. Zunächst erfolgt eine Verbundkonditionierung dafür werden die Proben bei 60 °C erst für 5 Minuten einer konstanten Oszillation bei 1Hz und 0,02 % Deformation gemessen, gefolgt von einem Amplitudentest zwischen 0,001 % und 1,0 % Deformation (ca. 5 Minuten Laufzeit). Anschließend wird auf 30 °C abgekühlt und eine Temperaturrampe gefahren. Anschließend wird mit einem Temperatursweep oszillierend von 30 °C bis 260 °C mit 3 °C/min (Sandwich im B-Zustand) und 30 °C bis 280 °C mit 5 °C/min (Sandwich im C-Zustand) bei einer Deformation von 0,02 % und 1 Hz gemessen. Die Temperatur, bei der sich ein Maximum des Verlustfaktors tan delta (δ) einstellt, wird im Sinne der Erfindung als Glasübergangstemperatur angesehen. Der Verlustfaktor berechnet sich aus dem Verhältnis von Verlustmodul E" und Speichermodul E':

$$\tan(\delta) = \frac{E''}{E'}$$

Die Klebstoffbeschichtung besteht bevorzugt aus einem Klebstoff, der im Vergleich mit marktüblichen, dem Fachmann bekannten, Backlacksystemen eine signifikant höhere Glasübergangstemperatur $T_{G_c}$ im C-Zustand aufweist. Die $T_{G_B}$ im B-Zustand ist dabei so eingestellt, dass es im Verlaufe der Verarbeitung des Elektrobands sowohl beim Stanzen als auch beim späteren Verbacken (Überführung in den C Zustand) zu keinen prozesstechnischen Nachteilen kommt (Abriebe im Stanzwerkzeug bzw. Lackaustritt im Verbackprozess). Der Klebstoff erweicht mithin nicht vor seiner Aktivierung, sondern bleibt ohne vollständig formstabil auf dem Blech bis zu seiner Aktivierung.

Besonders bevorzugt wird ein Klebstoff verwendet, der eine $T_{G_c}$ (C-Zustand) oberhalb der Temperatur eines laufenden Elektromotors. Diese Temperatur liegt beispielsweise im Elektromotor bei 80 °C bis 180 °C bevorzugt bei mindestens 100 °C, bevorzugt bei mindestens 120 °C oder 150 °C, besonders bevorzugt bei mindestens 170 °C mit Spitzen bis 200 °C, bevorzugt mit Spitzen bis 230 °C. Deshalb liegt $T_{G_c}$ (C-Zustand) in einer besonderen Ausführung bei 80 °C bis 260 °C bevorzugt bei mindestens 150 °C, bevorzugt bei mindestens 200 °C, besonders bevorzugt bei mindestens 230 °C. Dies weist den Effekt auf, dass der Klebstoff auch bei einer Anwendung bei höheren Temperaturen, insbesondere beim Einsatz als Klebstoff in Lamellenpaketen für die Anwendung in einem Elektromotor, nicht potenziell erweichen kann und dadurch eine verbesserte Mediendichtigkeit aufweist.

In einer bevorzugten Variante weist der Klebstoff besondere Scherwerte und Haftungsverluste auf, wobei die Scherwerte gemessen bei 200 °C in Anlehnung an DIN EN ISO 1465 einen Haftungsverlust ≤ 70 %, bevorzugt ≤ 50 %, besonders bevorzugt ≤ 40 %, insbesondere bevorzugt ≤ 30 % aufweisen. Der Haftungsverlust ergibt sich aus den Schwerwerten, was im Zusammenhang dieser Erfindung gleichbedeutend mit Klebfestigkeit ist, gemessen bei 200 °C und bei Raumtemperatur gemäß DIN EN ISO 1465. Der Haftungsverlust ist kann dann mittels folgender Formel berechnet werden:

$$Haftungsverlust = 1 - \frac{Scherwert_{200°C}}{Schwerwert_{RT}}$$

Werden im Folgenden die Eigenschaften des Klebstoffes bestimmt, so werden sie im B-Zustand gemessen, soweit nicht anders angegeben.

In einer besonderen Ausführungsform weist der Klebstoff eine Klebfestigkeit ≥ 2 N/mm$^2$, bevorzugt ≥ 4 N/mm$^2$,, besonders bevorzugt ≥ 6 N/mm$^2$, auf. Dies führt zu einer sicheren Verklebung in der jeweiligen Anwendung insbesondere für die Herstellung eines Lamellenpakets für einen Elektromotor. Die Klebfestigkeit der Klebstoffschicht wird mittels des Scherwertversuches nach DIN EN ISO 1465 bei Raumtemperatur gemessen.

In einer weiteren bevorzugten Ausführungsform weist der Klebstoff im B-Zustand bevorzugt auf einem Stahlblech, besonders bevorzugt auf einem NO-Elektroband, eine Bleistifthärte nach ISO 15184 von ≥ 2 H, bevorzugt ≥ 4, H besonders bevorzugt ≥ 6 H, insbesondere bevorzugt ≥ 7 H auf. Überaschenderweise können gute bis gleichbleibende Beleistifthärten bei verbesserter Lagestabilität für den erfindungsgemäßen Klebstoff erreicht werden.

Die Bleistifthärte wird mittels eines Härtetestes gemäß ISO 15184 im B-Zustand bestimmt. Die Gleitfähigkeit wird mittels eines 2 kg Gewichtes mit einer Auflagefläche von 2 cm$^2$ und einer Federwage bestimmt. Das Gewicht wird auf dem Klebstoff im B-Zustand positioniert und mit einem nicht elastischen Faden parallel zur Klebstoffoberfläche an einer Federwaage befestigt.

Die Gleitfähigkeit ist die aufgewendete, notwendige Kraft bis sich das Gewicht bewegt.

In einer weiteren Ausführung weist der Klebstoff im B-Zustand bevorzugt auf einem Stahlblech besonders bevorzugt auf einem NO-Elektroband einen Abrieb nach ISO 9352 von ≥ 20 Umdrehungen, bevorzugt ≥ 25 Umdrehungen, besonders bevorzugt ≥ 30 Umdrehungen, insbesondere bevorzugt ≥ 50 Umdrehungen auf. Ein verbesserter Abrieb, d.h. höhere Umdrehungsanzahlen, führt zu einer verringerten Verschmutzung des Stanzwerkzeugs. Durch eine verringerte Verschmutzung des Werkzeugs kann der Reinigungsaufwand des Stanzwerkzeugs minimiert werden.

In einer Ausführungsform weist der Klebstoff eine Blockfestigkeit im B-Zustand von 0 oder 1, bevorzugt 0 auf. Dies führt zu einer guten Verarbeitbarkeit im Stanzprozess. Die Blockfestigkeit kann als Maß für die Vorverklebung und Reaktion an der Oberfläche im B-Zustand gelten. Dies hat später Auswirkungen auf die Verarbeitbarkeit im Stanzprozess. Eine schlechte Blockfestigkeit führt zu einer rauen Oberfläche auf der Klebstoffseite beim Abwickeln des Coils. Dies führt zu negativen Auswirkungen während des Stanzprozesses unter anderem Verschmutzung und Abrieb im Stanzwerkzeug. Zur Bestimmung werden zwei Bleche mit aufgetragenem Klebstoff im B-Zustand in einer Presse mit 1,5 $N/mm^2$ bei 40 °C für 16 h gelagert. Anschließend wird die Verklebung der Bleche untereinander bestimmt mit den Parametern kein verkleben = 0, teilweise verkleben = 1, verklebt = 2.

**Schritt b)**

In Schritt b) werden mit einem oder mehreren Schneideschritte mit einem Austrennschritt, bevorzugt Stanzschritten mit einem finalen Ausstanzschritt, einer vorgegebenen Anzahl von Lamellen ausgestanzt.

Die Herstellung des Blechpakets erfolgt bevorzugt in einer Inline-Anlage, die zumindest aufweist: ein Schneidmittel, ein Austrennmittel, Bremse zum Auffangen und Stapeln der Lamellen, eine unterhalb der Bremse angeordnete Erwärmungseinrichtung sowie ein ebenfalls unterhalb der Bremse axial, also senkrecht zur Bremse und Lamellenstapel beweglichen Stempels.

Die Anordnung der Erwärmungseinheit unterhalb der Bremse umfasst in einer Alternative auch eine Anordnung, in welcher die Erwärmungseinheit im unteren Bereich, bevorzugt in der unteren Hälfte, insbesondere im unteren Drittel der Bremse angeordnet ist. In einer weiteren Alternative ist die Erwärmungseinheit so im unteren Bereich der Bremse angeordnet, dass sie zu mehr als 50 %, 60 %, bevorzugt mehr 70 %, besonders bevorzugt mehr als 80 %, insbesondere mehr 90 % ihrer Höhe aus der Bremse nach unten herausragt.

Der Begriff der Inline-Anlage bezieht sich darauf, dass eine Anzahl von Bearbeitungsstationen, nämlich wenigstens die oben genannten, in einer vorgegebenen Reihenfolge angeordnet sind, und in die Inline-Anlage hineingeführtes Blech, beispielsweise Elektroband, automatisiert und sequenziell an den vorgegebenen Stationen bearbeitet werden.

Das Schneidmittel dient dem Bilden von Strukturen der herzustellenden Lamelle. Dies kann beispielsweise mehrschrittig mit einem Schneidmittel oder mehrschrittig mit unterschiedlichen Schneidmitteln, wobei in beiden Fällen bevorzugt eine mehrschrittige Strukturbildung bei einer Lamelle vom Inneren hin zum Äußeren erfolgt, das heißt, eine Anzahl von mehreren erforderlichen Schneidvorgängen wird bevorzugt derart vorgesehen, dass die Schneidvorgänge zuerst die in einer Lamelle innersten Strukturen bilden und sodann schrittweise zum Lamellenäußeren hin Schneidvorgänge erfolgen.

Das Schneidmittel kann beispielsweise als Stanzstempel ausgebildet sein. Das Schneiden ist in diesem Fall ein Stanzen. Das Schneidmittel kann auch als Laser ausgebildet sein. Das Schneiden ist dann ein Laserstrahlschneiden.

Die Inline-Anlage kann auch eine Sequenz aus mehreren Schneidmitteln aufweisen, beispielsweise ausgebildet als Stanzwerkzeug mit mehreren sequenziell angeordneten Stanzstufen oder als Folge eines Stanzwerkzeugs und eines Lasers. Das wenigstens eine Schneidmittel kann als Folgeverbundwerkzeug ausgebildet sein, mit welchem die vorgegebene Geometrie der Lamelle in das Elektroband gestanzt wird, bevorzugt vom Lamelleninneren hin zum Lamellenäußeren.

Der Begriff der Lamelle bezeichnet in dem obigen Kontext ein durch Heraustrennen aus dem Blech gewonnenes Formteil, insbesondere ein durch Ausstanzen gewonnenes Formteil.

Weiterhin weist die Inline-Anlage, wie erwähnt, ein Austrennmittel auf. Dieses Austrennmittel ist bevorzugt als Ausschneidstempel ausgebildet, welcher durch zur Blechoberfläche senkrechte Kraftauswirkung die Lamellen sequenziell durch Trennen von dem das Lamellenäußere begrenzende Blech trennt und bevorzugt im selben Prozessschritt die Lamelle in eine unterhalb des Blechs angeordnete Aufnahmevorrichtung, insbesondere eine Bremse befördert, in welcher die Lamellen gesammelt werden. Bevorzugt stanzt der Ausschneidstempel die Lamelle in ihrer äußeren Begrenzung aus dem Blech aus. Das Austrennen ist in diesem Fall ein finaler Ausstanzschritt. Besonders bevorzugt sind Schneidmittel und Austrennmittel Bestandteil einer selben Presse mit dem Vorteil, dass eine hohe Synchronisierung der Stanz- und Auspressvorgänge vorliegt.

Mehrer Stanzschritte vor dem finalen Ausstanzsschritt haben den Vorteil, dass auch kompliziertere Lamellengeometrien effizient gestanzt werden können.

In einer besonderen Ausführungsform kann die Ausstanzgeschwindigkeit mindestens 100 Hub/min, bevorzugt 150 Hub/min besonders bevorzugt 170 Hub/min und maximal 250 Hub/min, bevorzugt 230 Hub/min, besonders bevorzugt 210 Hub/min betragen.

Nach einer vorgegebenen Anzahl an Lamellen wird ein Trennmittel aufgebracht. Dies führt dazu, dass alle Lamellen bis zum Trennmittel zu einem Lamellenpaket verbunden werden können und, dass die Lamellenpakete untereinander getrennt werden können. Dem Fachmann sind verschiedene Trennmittel wie Behandlungsfluide, z.B. Öle oder $H_2O$ bekannt.

Die vorgegebene Anzahl der Lamellen je Paket kann variieren. Bevorzugt ist die Lamellenanzahl ≥ 5, besonders bevorzugt ≥10, insbesondere bevorzugt ≥50.

In einer besonderen Ausführungsform beträgt, während des erfindungsgemäßen Verfahrens vor und während des Ausstanzens bevorzugt vor dem Stapeln, die Blechtemperatur ≤ 80 °C. Die Blechtemperatur kann aber vor dem erfindungsgemäßen Verfahren, insbesondere bei Auftrag des Klebstoffs höher liegen.

**Schritt c)**

In Schritt c) werden die Lamellen aufgefangen und in einer Bremse gestapelt.

Die Bremse ist ein Positionierbereich zur Bildung eines Lamellenstapels. Das Auffangen in der Bremse dient zur positions- und/oder winkelausgerichteten Übereinanderpositionierung der Lamellen. Des Weiteren weist die Bremse einen Mantelquerschnitt auf, der im Wesentlichen dem Querschnitt der Lamellen entspricht oder bevorzugt einen geringfügig geringen Querschnitt aufweist. Dies hat den Vorteil, dass die Lamellen beim Auffangen in der Bremse abgebremst werden. Dadurch wird auch ein Bremsdruck aufgebaut. In einer Ausführung weist die Bremse Einstülpungen, wie z.B. mindestens eine Nut auf, die passgenau auf einen Ausschnitt der Lamelle abgestimmt ist, so dass die Stapelgenauigkeit gewährleistet wird. In einer besonderen Ausführungsform kann die Bremse nach einer vorgegebenen Anzahl an Lamellen ≥10°, bevorzugt ≥45°, besonders bevorzugt ≥90°, gedreht werden. Dies führt unter anderem zu homogeneren magnetischen Eigenschaften am Blechpaket und Höhentoleranzen werden ebenfalls ausgeglichen.

In einer besonderen Ausführungsform beträgt die Temperatur der Bremse während des Herstellungsprozesses ≤120 °C, bevorzugt ≤100 °C, besonders bevorzugt ≤80 °C, insbesondere bevorzugt ≤50 °C. Dadurch kann eine potenzielle Verunreinigung der Bremse durch Klebereste von ausgetretenem Kleber zwischen den Lamellen während des Verfahrens vermieden werden.

**Schritt d)**

In Schritt d) findet ein axiale Kraftbeaufschlagung auf das Lamellenpaket statt.

Durch die axiale Kraftbeaufschlagung werden die Lamellen im Stapel fixiert. Die Aktivierung des Klebstoffs erfolgt nach dem Ausstanzschritt bevorzugt während des Stapelns, besonders bevorzugt während der axialen Kraftbeaufschlagung. Durch die Aktivierung sind die reaktiven Gruppen in den Bestandteilen des Klebstoffs, also die reaktiven Gruppen in dem mindestens einen Epoxidharz, dem latenten Härter und dem latenten Beschleuniger in der Lage zu reagieren und Polymere zu bilden. Durch die Reaktion wird der Klebstoff im Anschluss und als Folge der Aktivierung ausgehärtet (vernetzt), bis zu einem Aushärtungsgrad von mindestens 60 %, 65 %, 70 %, bevorzugt mindestens 75 %, 80 %, besonders bevorzugt mindestens 85 %, 90 %, insbesondere mindestens 95 %. Ein Aushärtungsgrad von 100 % ist aus sterischen Gründen nicht erreichbar.

Mit Aushärtungsgrad wird der erreichte chemische Umsatzgrad bei einer Vernetzungsreaktion, also der Abbau von Oligomeren hin zum Aufbau von Polymeren kurz Aushärtung, beschrieben. Der Aushärtungsgrad kann messtechnisch mittels Dynamische Differenzkalorimetrie (DSC) bestimmt werden. In einer Alternative ist der Aushärtegrad $\alpha$ (alpha) die umgesetzte Wärmemenge geteilt durch die Reaktionsenthalpie. DIN EN ISO 11357-5 beispielsweise ist eine spezifische Norm, die die Durchführung von DSC-Messungen standardisiert.

Während des Prozesses können anschließende Lagerzeiten verringert werden oder es ist keine Lagerung notwendig. Durch den hohen Grad der Vernetzung wird auch die Maßhaltigkeit noch einmal erhöht.

In einer besonderen Ausführungsform wird bei dem erfindungsgemäßen Verfahren der Klebstoff parallel auf mehrere Lamellen gleichzeitig aktiviert. Bevorzugt wird der Klebstoff auf ≥2 Lamellen, besonders bevorzugt ≥4 Lamellen, insbesondere bevorzugt ≥30 Lamellen gleichzeitig aktiviert und härtet anschließend aus, bevorzugt bis zu einem Aushärtungsgrad von mindestens 60 %, 65 %, 70 %, bevorzugt mindestens 75 %, 80 %, besonders bevorzugt mindestens 85 %, 90 %, insbesondere mindestens 95 %. Es liegt ein Duroplast vor. Durch das Vernetzen mehrerer Lamellen kann die Verklebegeschwindigkeit weiter erhöht werden.

In einer besonderen Ausführungsform wird die erforderliche Wärme für das Aktivieren und das anschließende Aushärten durch Induktion in das Lamellenpaket eingebracht. Das Einbringen der Wärme durch Induktion bewirkt, dass kein Kontakt zwischen warmen Werkzeugen und dem Lamellenpaket entsteht. Dadurch kann das potenzielle Verkleben der Werkzeuge minimiert werden. In einer Ausführung werden die Bremse und/oder weitere Werkzeugteile thermisch, z.B. mittels Teflons von der Erwärmungseinrichtung isoliert.

Durch Erwärmung und Kraftbeaufschlagung erfolgt das Paketieren des Lamellenstapels durch Verkleben der einzelnen Lamellen miteinander aufgrund der Vernetzung und Aushärtung des Klebstoffs nach Aktivierung.

Das Paketieren erfolgt mit folgenden Parametern:

Die gemittelte Geschwindigkeit des Lamellenpaketes durch die Bremse und Erwärmungseinrichtung

von 0,350 mm/s bis 1,00 mm/s, bevorzugt 0,5 mm/s bis 0,9 mm/s, besonders bevorzugt 0,7 mm/s bis 0,80 mm/s, insbesondere 0,72 mm/s bis 0,78 mm/s;

Druckkraft zwischen unterem Stempel und Bremse von mindestens 0,2, bevorzugt 0,3, besonders bevorzugt 0,4 und maximal 6,0, bevorzugt 3,0, besonders bevorzugt 1,0, insbesondere 0,6 jeweils MPa;

Erwärmungsleistung, bevorzugt Induktorleistung von mindestens 2,0, bevorzugt 5,0, besonders bevorzugt 10,0 und maximal 25,0, bevorzugt 20,0, besonders bevorzugt 15,0 jeweils kW;

wobei eine Temperatur am Stapel von mindestens 140, bevorzugt 160, besonders bevorzugt 170 und maximal 250, bevorzugt 200, besonders bevorzugt 190 jeweils Grad Celsius auftritt.

**Schritt e)**

In Schritt e) erfolgt ein optionale zweite axiale Kraftbeaufschlagung. Bevorzugt erfolgt diese zweite axiale Kraftbeaufschlagung in einer anderen Vorrichtung als die erste Kraftbeaufschlagung. Bevorzugt erfolgt die zweite axiale Kraftbeaufschlagung bei einer Temperatur am Stapel von mindestens 140, bevorzugt 160, besonders bevorzugt 170 und maximal 250, bevorzugt 200, besonders bevorzugt 190 jeweils Grad Celsius. Durch diese optionale zweite axiale Kraftbeaufschlagung kann die Mediendichtigkeit des Stapels weiter erhöht werden.

Durch das erfindungsgemäße Verfahren, insbesondere unter Verwendung der erfindungsgemäßen Vorrichtung erfolgt ein Paketieren, bevorzugt Verkleben direkt in der Vorrichtung, insbesondere ohne zusätzlichen Prozessschritt der vorrangig dem Verkleben dient. Es werden mithin Verarbeitungsschritte gegenüber dem Stand der Technik eingespart. Bevorzugt weist das Verfahren und die Vorrichtung keine weitere Wärme- oder Strahlungsquelle auf.

In der Ausführung der Erwärmungseinrichtung als Induktionsspule erfolgt ein Aktivieren und Vernetzen bzw. Aushärten des Klebstoffs vollflächig über die gesamte Fläche der jeweiligen Lamelle.

Aufgrund des vollflächigen Aushärtens können Stator- oder Rotorpakete für Elektromotoren mit einem Durchmesser von bis 600 mm, bevorzugt 500 mm hergestellt werden.

In einer anderen Ausführungsform kann das erfindungsgemäße Verfahren auch für den Teilschnitt (Segmentierung) als auch auf die Einzelzahnfertigung angewendet werden.

In einer besonderen Ausführungsform können mehrere Blechpakete mittels des erfindungsgemäßen Verfahrens parallel vorzugsweise auch aus demselben Blech hergestellt werden. Dabei werden zwei oder mehrere erfindungsgemäßen Vorrichtungen parallel nebeneinander geschaltet.

Aufgrund des lediglich einen Erwärmungsschritts ist das erfindungsgemäße Verfahren in Bezug auf Energieverbrauch sparsamer und nachhaltiger.

Die Erfindung kann auch nach den folgen Ausführungsformen ausgestaltet sein,

Ausführungsform 1:

Verfahren zum Herstellen eines Blechpakets im Vollschnitt für einen Elektromotor, wobei das Verfahren folgende Schritte umfasst:

a) Bereitstellen eines mit einem thermisch aktivierbaren Klebstoff beschichteten Blechs,

b) Einen oder mehrere Schneideschritte mit einem Austrennschritt einer vorgegebenen Anzahl von Lamellen und Aufbringen eines Trennmittels nach der vorgegebenen Anzahl an Lamellen,

c) Auffangen und Stapeln der Lamellen in einer Bremse,

d) Axiale Kraftbeaufschlagung auf den Lamellenstapel,

**wobei** ein Aktivieren des Klebstoffs nach dem Austrennschritt erfolgt.

Ausführungsform 2:
Verfahren nach Ausführungsform 1, dadurch gekennzeichnet, dass das Aktivieren des Klebstoffs durch Einbringung von Wärme erfolgt.

Ausführungsform 3:
Verfahren nach einer der vorherigen Ausführungsformen dadurch gekennzeichnet, dass im Anschluss der Aktivierung eine Aushärtung des Klebstoffs bis zu einem Aushärtungsgrad von mindestens 60 % erfolgt.

Ausführungsform 4:
Verfahren nach einer der vorherigen Ausführungsformen, dadurch gekennzeichnet, dass die Bremse nach einer vorgegebenen Anzahl an Lamellen ≥ 10° gedreht wird.

Ausführungsform 5:
Verfahren nach einer der vorherigen Ausführungsformen, dadurch gekennzeichnet, dass der Klebstoff parallel mehreren Lamellen gleichzeitig aktiviert wird.

Ausführungsform 6:
Verfahren nach einer der vorherigen Ausführungsformen, dadurch gekennzeichnet, dass die Ausstanzgeschwindigkeit mindestens 100 Hub/min und maximal 250 Hub/min beträgt.

Ausführungsform 7:
Verfahren nach einer der vorherigen Ausführungsformen, dadurch gekennzeichnet, dass das Blech ein Elektroblech mit einer Dicke ≤ 0,35 mm ist.

Ausführungsform 8:
Verfahren nach einer der vorherigen Ausführungsformen, dadurch gekennzeichnet, dass in dem Verfahren vor und während des Ausstanzens die Blechtemperatur ≤ 80 °C beträgt.

Ausführungsform 9:
Verfahren nach einer der vorherigen Ausführungsformen, dadurch gekennzeichnet, dass die erforderliche Wärme für das Aktivieren und bevorzugt für einen Aushärtungsgrad von mindestens 60 % durch Induktion in das Lamellenpaket eingebracht wird.

Ausführungsform 10:
Verfahren nach einer der vorherigen Ausführungsformen, dadurch gekennzeichnet, dass der verwendete thermisch aktivierbare Klebstoff in ≤60 Sekunden aktiviert wird.

Ausführungsform 11:
Verfahren nach einer der vorherigen Ausführungsformen, dadurch gekennzeichnet, dass der thermisch aktivierbare Klebstoff enthält:

60 Gewichtsteile mindestens eines Epoxidharzes in Festharzform,
0,5 bis 15 Gewichtsteile eines latenten Härters,
1 bis 15 Gewichtsteile eines latenten Beschleunigers.

Ausführungsform 12:
Verfahren nach einer der vorherigen Ausführungsformen, dadurch gekennzeichnet, dass die Temperatur der Bremse während des Herstellungsprozesses ≤120 °C beträgt.

Ausführungsform 13:
Vorrichtung zur Herstellung eines Blechpakets im Vollschnitt, für einen Elektromotor, umfassend:

a) eine oder mehrere Stanzvorrichtungen mit einer Austrennvorrichtung,
b) in einer Bremse, so ausgebildet, dass die Lamellen aus der finalen Austrennvorrichtung positions- und/oder winkelausgerichtet übereinander stapelbar sind,
c) eine Erwärmungseinrichtung, welche unterhalb der Bremse angeordnet ist,
d) einen axial beweglichen Stempel, welcher an der gegenüberliegenden Öffnung der Bremse von der Austrennvorrichtung angeordnet ist.

Ausführungsform 14:
Vorrichtung nach Ausführungsform 13, dadurch gekennzeichnet, dass die Bremse Hohlzylinder und/oder der Stempel synchron drehbar sind.

Ausführungsform 15:
Vorrichtung nach den Ausführungsformen 13 bis 14, dadurch gekennzeichnet, dass die Bremse nicht durch die Erwärmungseinrichtung erwärmt werden kann.

Die Erfindung wird nachfolgend anhand der Figuren näher erläutert.

In **Fig.1** und **Fig. 1** wird die erfindungsgemäße Vorrichtung gezeigt. Das Blech wird kontinuierlich in die Anlage eingeführt. In Fig. 1 wird eine Vorrichtung gezeigt, welche mehrere Stanzvorrichtungen mit einer Austrennvorrichtung umfasst. In **Fig. 2** wird eine Vorrichtung gezeigt, welche eine Stanzvorrichtung mit einer Austrennvorrichtung umfasst. Die jeweilige Ausführungsform wird nach den Anforderungen an die Lamellengeometrie und unter Berücksichtigung der Effizienz des Prozesses gewählt. Für komplexere Lamellengeometrien werden mehrere Stanzvorrichtungen gewählt. Die Austrennvorrichtung löst mit einer Stößelkraft die Lamelle aus dem Blech. Die Lamellen werden anschließend positions- und/oder winkelausgerichtet übereinander im Hohlzylinder gestapelt. In einer besonderen Ausführungsform kann eine Bremskraft auf die Lamellen wirken, wenn der Hohlzylinder im Durchmesser gleich oder geringer als der Durchmesser der Lamelle ist. Unterhalb des Hohlzylinders befindet sich eine Erwärmungseinheit, welche das Lamellenpaket aktiviert. In der gezeigten Ausführungsform handelt es sich um eine induktive Heizung. In einer besonderen Ausführungsform ist die induktive Heizung in Form einer Spule und der Hohlzylinder so zueinander ausgebildet, dass der Hohlzylinder nicht durch die Spule erwärmt wird. Das Lamellenpaket wird durch den Stempel mit einer axialen Kraft beaufschlagt. Der Stempel kann das Lamellenpaket unterhalb der induktiven Heizung fahren und ein Entnehmen des Lamellenpakets aus der Vorrichtung ermöglichen.

## Patentansprüche

1. Verfahren zum Herstellen eines Blechpakets im Vollschnitt oder Teilschnitt für einen Elektromotor, wobei das Verfahren folgende Schritte umfasst:

   a) Bereitstellen eines mit einem thermisch aktivierbaren Klebstoff beschichteten Blechs,
   b) Einen oder mehrere Schneideschritte mit einem Austrennschritt einer vorgegebenen Anzahl von Lamellen und Aufbringen eines Trennmittels nach der vorgegebenen Anzahl an Lamellen,

c) Auffangen und Stapeln der Lamellen in einer Bremse,

d) Axiale Kraftbeaufschlagung auf den Lamellenstapel,

e) Optionale zweite axiale Kraftbeaufschlagung auf den Lamellenstapel

**dadurch gekennzeichnet, dass** ein Aktivieren des Klebstoffs nach dem Austrennschritt erfolgt.

**2.** Verfahren nach Anspruch 1, **dadurch gekennzeichnet, dass** das Aktivieren des Klebstoffs durch Einbringung von Wärme erfolgt.

**3.** Verfahren nach einem der vorherigen Ansprüche, **dadurch gekennzeichnet, dass** im Anschluss der Aktivierung eine Aushärtung des Klebstoffs bis zu einem Aushärtungsgrad von mindestens 60 % erfolgt.

**4.** Verfahren nach einem der vorherigen Ansprüche, **dadurch gekennzeichnet, dass** die Bremse nach einer vorgegebenen Anzahl an Lamellen ≥10° gedreht wird.

**5.** Verfahren nach einem der vorherigen Ansprüche, **dadurch gekennzeichnet, dass** der Klebstoff parallel mehreren Lamellen gleichzeitig aktiviert wird.

**6.** Verfahren nach einem der vorherigen Ansprüche, **dadurch gekennzeichnet, dass** die Ausstanzgeschwindigkeit mindestens 100 Hub/min und maximal 250 Hub/min beträgt.

**7.** Verfahren nach einem der vorherigen Ansprüche, **dadurch gekennzeichnet, dass** das Blech ein Elektroblech mit einer Dicke ≤ 0,35 mm ist.

**8.** Verfahren nach einem der vorherigen Ansprüche, **dadurch gekennzeichnet, dass** in dem Verfahren vor und während des Ausstanzens die Blechtemperatur ≤ 80 °C beträgt.

**9.** Verfahren nach einem der vorherigen Ansprüche, **dadurch gekennzeichnet, dass** die erforderliche Wärme für das Aktivieren und bevorzugt für einen Aushärtungsgrad von mindestens 60 % durch Induktion in das Lamellenpaket eingebracht wird.

**10.** Verfahren nach einem der vorherigen Ansprüche, **dadurch gekennzeichnet, dass** der verwendete thermisch aktivierbare Klebstoff in ≤60 Sekunden aktiviert wird.

**11.** Verfahren nach einem der vorherigen Ansprüche, **dadurch gekennzeichnet, dass** der thermisch aktivierbare Klebstoff enthält:

60 Gewichtsteile mindestens eines Epoxidharzes in Festharzform,

0,5 bis 15 Gewichtsteile eines latenten Härters,

1 bis 15 Gewichtsteile eines latenten Beschleunigers.

**12.** Verfahren nach einem der vorherigen Ansprüche, **dadurch gekennzeichnet, dass** die Temperatur der Bremse während des Herstellungsprozesses ≤120 °C beträgt.

**13.** Vorrichtung zur Herstellung eines Blechpakets im Vollschnitt oder Teilschnitt, für einen Elektromotor, umfassend:

a) eine oder mehrere Stanzvorrichtungen mit einer Austrennvorrichtung,

b) in einer Bremse, so ausgebildet, dass die Lamellen aus der finalen Austrennvorrichtung positions- und/oder winkelausgerichtet übereinander stapelbar sind,

c) eine Erwärmungseinrichtung, welche unterhalb der Bremse angeordnet ist,

d) einen axial beweglichen Stempel, welcher an der gegenüberliegenden Öffnung der Bremse von der Austrennvorrichtung angeordnet ist.

**14.** Vorrichtung nach Anspruch 13, **dadurch gekennzeichnet, dass** die Bremse Hohlzylinder und/oder der Stempel synchron drehbar sind.

**15.** Vorrichtung nach den Ansprüchen 13 bis 14, **dadurch gekennzeichnet, dass** die Bremse nicht durch die Erwärmungseinrichtung erwärmt werden kann.

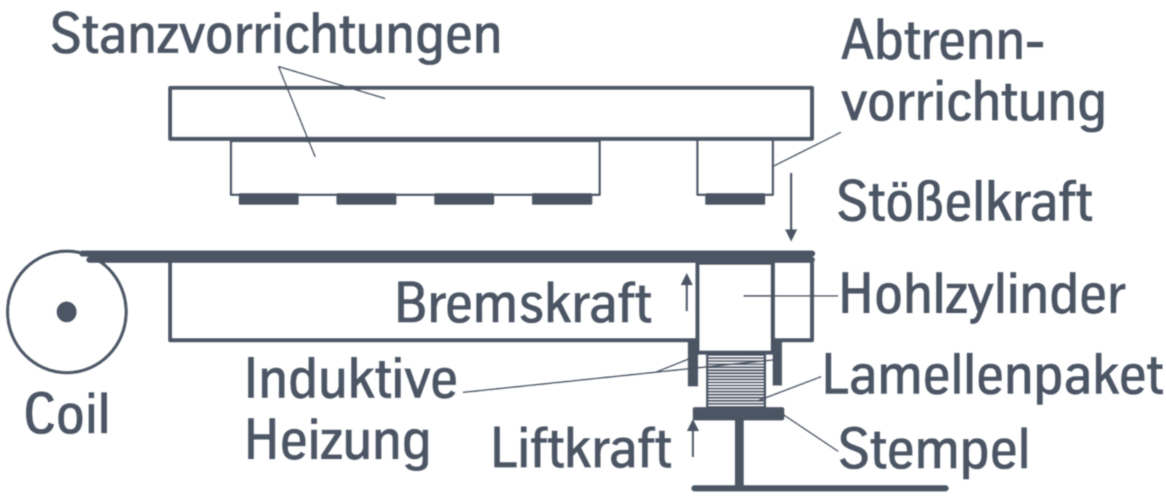
Stanzvorrichtungen
Abtrenn-
vorrichtung
Stößelkraft
Hohlzylinder
Bremskraft
Coil
Induktive
Heizung
Lamellenpaket
Liftkraft
Stempel

Fig. 1

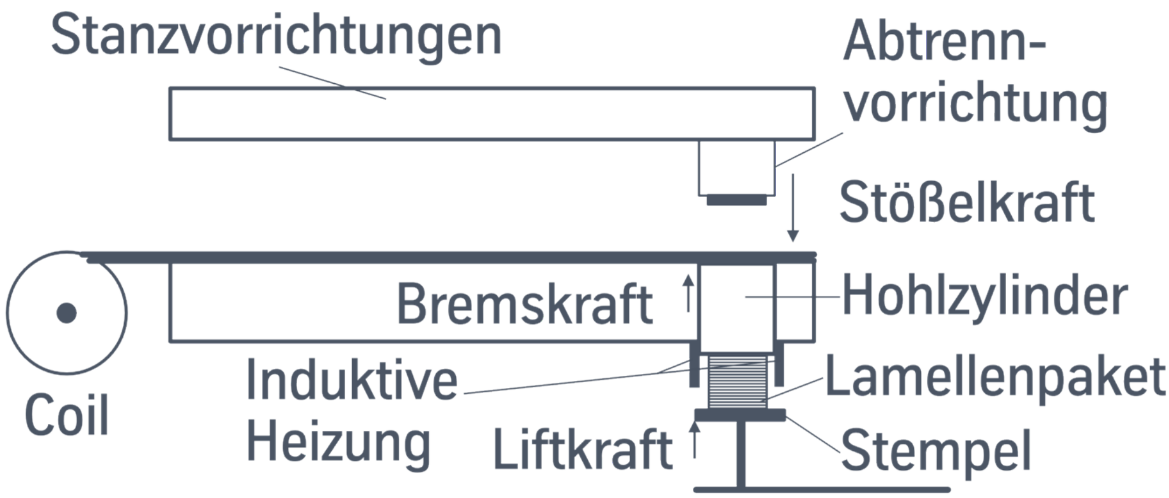
Stanzvorrichtungen
Abtrenn-
vorrichtung
Stößelkraft
Hohlzylinder
Bremskraft
Coil
Induktive
Heizung
Lamellenpaket
Liftkraft
Stempel

Fig. 2

Europäisches Patentamt
European Patent Office
Office européen des brevets

# EUROPÄISCHER RECHERCHENBERICHT

Nummer der Anmeldung
EP 25 20 7501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | EP 4 360 800 A1 (VOESTALPINE AUTOMOTIVE COMPONENTS DETTINGEN GMBH & CO KG [DE])<br>1. Mai 2024 (2024-05-01)<br>* Absätze [0001], [0019], [0023] - [0026] *<br>* Abbildung 1 * | 1-10,12, 14,15<br>11 | INV.<br>B32B37/12<br>C08G59/40<br>C08G59/68<br>B32B37/00<br>B32B37/06<br>B32B37/10<br>B32B37/18 |
| Y | EP 4 361 230 A1 (SIKA JAPAN LTD [JP]; NIPPON STEEL CORP [JP])<br>1. Mai 2024 (2024-05-01)<br>* das ganze Dokument *<br>* Absatz [0002] *<br>* Absatz [0184] * | 11 | |
| Y | US 2020/172775 A1 (KOKKOT RANJITH [US] ET AL) 4. Juni 2020 (2020-06-04)<br>* Ansprüche 1-16 *<br>* das ganze Dokument *<br>* Absatz [0039]; Tabelle 2 * | 11 | |
| Y | US 11 739 241 B2 (DDP SPECIALTY ELECTRONIC MATERIALS US LLC [US])<br>29. August 2023 (2023-08-29)<br>* das ganze Dokument *<br>* Tabelle 3 * | 11 | RECHERCHIERTE SACHGEBIETE (IPC)<br>B32B<br>C08G |
| A | US 2022/064505 A1 (LIN GENG [US] ET AL)<br>3. März 2022 (2022-03-03)<br>* das ganze Dokument *<br>* Beispiele 1-3; Tabelle 1 *<br>* Ansprüche 1-15 * | 1-15 | |
| A | EP 3 892 467 A1 (VOESTALPINE AUTOMOTIVE COMPONENTS DETTINGEN GMBH & CO KG [DE])<br>13. Oktober 2021 (2021-10-13)<br>* das ganze Dokument *<br>-/-- | 1-15 | |

Der vorliegende Recherchenbericht wurde für alle Patentansprüche erstellt

2

| Recherchenort | Abschlußdatum der Recherche | Prüfer |
|---|---|---|
| München | 20. Februar 2026 | Tischler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung
EP 25 20 7501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 329 167 A1 (VOESTALPINE STAHL GMBH [AT]) 28. Februar 2024 (2024-02-28)<br>* das ganze Dokument *<br>----- | 1-15 | |
| A | EP 4 371 771 A1 (UNIV KASSEL [DE]) 22. Mai 2024 (2024-05-22)<br>* das ganze Dokument *<br>----- | 1-15 | |
| A | DE 10 2022 102821 A1 (VOESTALPINE AUTOMOTIVE COMPONENTS DETTINGEN GMBH & CO KG [DE]) 10. August 2023 (2023-08-10)<br>* das ganze Dokument *<br>----- | 1-15 | |
| | | | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| München | 20. Februar 2026 | Tischler, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 20 7501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2026

| Im Recherchenbericht angeführtes Patentdokument | Datum der Veröffentlichung | Mitglied(er) der Patentfamilie | Datum der Veröffentlichung |
|---|---|---|---|
| EP 4360800 A1 | 01-05-2024 | EP 4360800 A1 | 01-05-2024 |
| | | EP 4608602 A1 | 03-09-2025 |
| | | WO 2024089268 A1 | 02-05-2024 |
| EP 4361230 A1 | 01-05-2024 | BR 112023026586 A2 | 05-03-2024 |
| | | CA 3222811 A1 | 29-12-2022 |
| | | CN 117580925 A | 20-02-2024 |
| | | EP 4361230 A1 | 01-05-2024 |
| | | JP 7660675 B2 | 11-04-2025 |
| | | JP WO2022270154 A1 | 29-12-2022 |
| | | KR 20240017060 A | 06-02-2024 |
| | | TW 202309232 A | 01-03-2023 |
| | | US 2024294812 A1 | 05-09-2024 |
| | | WO 2022270154 A1 | 29-12-2022 |
| US 2020172775 A1 | 04-06-2020 | EP 3642290 A1 | 29-04-2020 |
| | | US 2020172775 A1 | 04-06-2020 |
| | | WO 2018236721 A1 | 27-12-2018 |
| US 11739241 B2 | 29-08-2023 | CN 110892033 A | 17-03-2020 |
| | | EP 3642292 A1 | 29-04-2020 |
| | | JP 7018079 B2 | 09-02-2022 |
| | | JP 2020524728 A | 20-08-2020 |
| | | KR 20200028339 A | 16-03-2020 |
| | | US 2021155835 A1 | 27-05-2021 |
| | | WO 2018236454 A1 | 27-12-2018 |
| US 2022064505 A1 | 03-03-2022 | KEINE | |
| EP 3892467 A1 | 13-10-2021 | CN 115768630 A | 07-03-2023 |
| | | EP 3892467 A1 | 13-10-2021 |
| | | EP 4132789 A1 | 15-02-2023 |
| | | HU E067100 T2 | 28-09-2024 |
| | | JP 2023521352 A | 24-05-2023 |
| | | KR 20230023616 A | 17-02-2023 |
| | | PL 4132789 T3 | 19-08-2024 |
| | | US 2023170771 A1 | 01-06-2023 |
| | | WO 2021204912 A1 | 14-10-2021 |
| EP 4329167 A1 | 28-02-2024 | CN 120035926 A | 23-05-2025 |
| | | EP 4329167 A1 | 28-02-2024 |
| | | EP 4612782 A1 | 10-09-2025 |
| | | KR 20250105414 A | 08-07-2025 |
| | | WO 2024094898 A1 | 10-05-2024 |
| EP 4371771 A1 | 22-05-2024 | EP 4371771 A1 | 22-05-2024 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 25 20 7501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2026

| Im Recherchenbericht angeführtes Patentdokument | Datum der Veröffentlichung | Mitglied(er) der Patentfamilie | Datum der Veröffentlichung |
|---|---|---|---|
| | | WO 2024105011 A1 | 23-05-2024 |
| DE 102022102821 A1 | 10-08-2023 | DE 102022102821 A1 | 10-08-2023 |
| | | EP 4477035 A1 | 18-12-2024 |
| | | US 2025167643 A1 | 22-05-2025 |
| | | WO 2023147919 A1 | 10-08-2023 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102012001744 A1
- DE 102019113290 A1
- EP 2635438 A1